# EUROPEAN PATENT SPECIFICATION

(11) **EP 2 033 727 B1**
(45) Date of publication and mention of the grant of the patent: **28.11.2018**
(21) Application number: 08163990.8
(22) Date of filing: 09.09.2008
(51) Int. Cl.: B23B 29/034

(54) **Adjustable tool-holder head, and relative adjustment method**
Verstellbarer Werkzeughalterkopf und entsprechendes Einstellverfahren
Tête de support d'outils réglable et procédé de réglage correspondant

(30) Priority: 10.09.2007 IT UD20070161
(43) Date of publication of application: 11.03.2009
(73) Proprietor: Antonelli, Alessandro, 61036 Colli al Metauro (PU) (IT)
(72) Inventor: Antonelli, Alessandro, 61036 Colli al Metauro (PU) (IT)
(74) Representative: Petraz, Gilberto Luigi

(56) References cited:
- DE-A1- 3 037 566
- DE-C- 200 186
- US-A- 4 761 103

## Description

### FIELD OF THE INVENTION

The present invention concerns an adjustable tool-holder head, that is, able to allow the selective adjustment of its cutting diameter, inside a determinate range of values. The tool-holder head according to the present invention is applied particularly, but not exclusively, in precision working such as boring, reaming or suchlike, where working tolerances in the order of hundredths or thousands of a millimeter may be required. The present invention also concerns the method to adjust the cutting diameter of the tool.

### BACKGROUND OF THE INVENTION

Adjustable tool-holder heads are known, which allow a desired variation in the cutting diameter, in order to make the tool more functional.

Adjustable tool-holder heads allow to use the same tool with several diameters, and to restore the nominal diameter of the tool following accidental variations in the cutting diameter, for example due to wear, sharpening, replacement of the cutter or other.

Adjustable tool-holder heads are also known for so-called precision tools, such as boring bars, reamers, or suchlike, whose working tolerances are normally in the range of hundredths or thousandths of a millimeter.

This type of known tool-holder head provides one or more mobile cutter-holder cartridges, associated in a radially sliding manner with a supporting body, mounted on a mandrel of the machine tool.

The cartridges are associated with the supporting body by means of a complex adjustment mechanism that allows the substantially step-wise radial displacement of the cartridge according to predefined discrete portions.

According to the tolerance required, the adjustment mechanism allows only a displacement of the cartridge by predetermined centesimal or millesimal units, for each step in one direction or the other.

This type of known tool-holder head does not allow to displace the cartridge by intermediate values between the predetermined portions. In this way the precision of adjustment is limited, as are the possible workings, and above all the possibility of restoring the nominal diameter of the tool with precision following accidental variations in the cutting diameter.

Furthermore, the complexity of the adjustment mechanism entails high production costs, long and costly maintenance operations in the event of breakages, and also the intervention of highly specialized personnel.

Another disadvantage of the state of the art is that, by providing a determinate movement with predefined steps of the cartridge, numerous series of different sizes of the tool-holder head must be made in order to cover the widest possible range of measurements and tolerances for the cutting diameters.

From US 4 761 103 there is known a tool-holder head according to the preamble of claim 1 and a method to adjust the cutting diameter of a tool according to the preamble of claim 16.

One purpose of the present invention is to achieve an adjustable tool-holder head which is simple and economical to make and which allows, in an effective and very precise manner, a free adjustment of the cutting diameter of the tool, of any value between a maximum limit and a minimum limit.

Another purpose of the present invention is to achieve a tool-holder head which allows to restore, substantially for any value, the nominal diameter of the tool following possible accidental variations in the cutting diameter.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the relative dependent claims describe other characteristics of the invention or variants to the main inventive idea.

A tool-holder head of the adjustable type according to the present invention comprises a supporting body able to be attached to a mandrel of a machine tool.

It also comprises at least a mobile element or cartridge, on which a cutter of the tool is attached. The mobile element is mounted sliding in a radial direction with respect to the supporting body, in order to adjust the cutting diameter of the tool, and cooperates with an adjustment mechanism mounted on the supporting body and able to move the mobile element in a controlled manner with respect to the supporting body.

In accordance with the above purposes, the adjustment mechanism comprises a screw element, which is disposed substantially parallel to the direction of movement of the mobile element.

The screw element is able to rotate around its own axis of rotation, it is mounted on the supporting body in a constrained manner with respect to the direction of its own axis of rotation, and is able to determine the controlled movement of the mobile element with respect to the supporting body, in all the possible positions between a maximum limit and a minimum limit.

With the present invention it is therefore possible, with a simple rotatable screw element, constrained along its axis of rotation, to determine the controlled radial movement of the mobile element, so as to adjust the diameter of the cutting tool as desired.

The adjustment made with the tool-holder head according to the present invention, since it is made with a screw element, is also continuous and not with predetermined steps, so that it is possible to adjust the diameter of the tool substantially for any value and/or working tolerance.

With the present invention it is possible to provide a limited number of sizes of tool-holder head so as to cover the widest possible range of sizes and/or tolerances of the cutting diameters.

The adjustment mechanism also comprises elastic means able to contrast possible transverse displacements of the mobile element during its movement, and to guarantee the radial and linear movement thereof with respect to the supporting body.

The elastic means that contrasts the possible transverse displacements of the mobile element due for example to the type of thread of the screw element, allows a great and constant precision of movement of the mobile element, for the whole radial movement provided. In this way, the precision in movement is not affected by the type of thread provided on the screw element.

The solution according to the present invention is also advantageous with regard to the possible restoration of the nominal diameter of the tool following possible accidental variations in the cutting diameter, due to wear, sharpening or replacement of the cutter.

The solution according to the present invention, providing a radial and precise movement of the mobile element, consequently allows an equally precise adjustment and restoration of the nominal diameter of the tool, substantially for any working tolerance.

According to a variant, the supporting body comprises at least a sliding seating in which the mobile element is slidingly positioned. The sliding seating comprises two lateral guide walls distanced from each other by a value coordinated with the width of the mobile element, so as to guide the radial movement thereof with precision.

Advantageously, the elastic means acts above the mobile element in order to keep it, under pressure, inside the seating.

According to another variant, the tool-holder head comprises clamping means mounted on the supporting body and able to act selectively against the mobile element in order to prevent the radial movement thereof with respect to the supporting body.

According to another variant, the screw element comprises an axial incision facing toward the outside of the supporting body and able to allow the selective rotation of the screw element, by means of a common screwing tool, such as for example a spanner, a screwdriver or other.

According to another variant, each supporting body comprises two or more sliding seatings to house an equal number of mobile elements in sliding fashion, each one supporting a relative cutter and moved by a relative movement member. According to this variant, the sliding seatings are advantageously disposed offset to each other with respect to the same radial axis, to allow the positioning of the movement mechanisms of each mobile element.

According to another variant the tool-holder head according to the present invention comprises at least an attachment member able to fix the supporting body concentrically to the mandrel.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a front view of a first form of embodiment of the tool-holder head according to the present invention;
- fig. 2 is a part section of the tool-holder head in fig. 1;
- fig. 3 is a view from above, partly in section, of the tool-holder head in fig. 1;
- fig. 4 is a variant of fig.2;
- fig. 5 is a front view of a second form of embodiment of the tool-holder head according to the present invention;
- fig. 6 is a part section of the tool-holder head in fig. 5;
- fig. 7 is a view from above, partly in section, of the tool-holder head in fig.5;
- fig. 8 is a front section of the tool-holder head according to the present invention with an attachment member to attach it to the mandrel of the machine tool;
- fig. 9 is a variant of fig. 8.

### DETAILED DESCRIPTION OF A PREFERENTIAL FORM OF EMBODIMENT

With reference to the attached drawings, a tool-holder head 10 according to the present invention is of the adjustable type and is able to be attached to a mandrel 11 of a machine tool. Here and hereafter in the description, by the term machine tool we mean any automated or semi-automated plant, of a monofunctional or polyfunctional type, suitable to perform mechanical processes of removal of material.

In this case, the tool-holder head 10 is able to support one or more cutting tools 12 for boring or reaming, provided with a relative cutting platelet 13, allowing to selectively adjust the cutting diameter thereof.

The tool-holder head 10 according to the invention generally comprises a supporting body 15 and a cartridge 17 to adjust each tool 12, mounted sliding radially with respect to the supporting body 15.

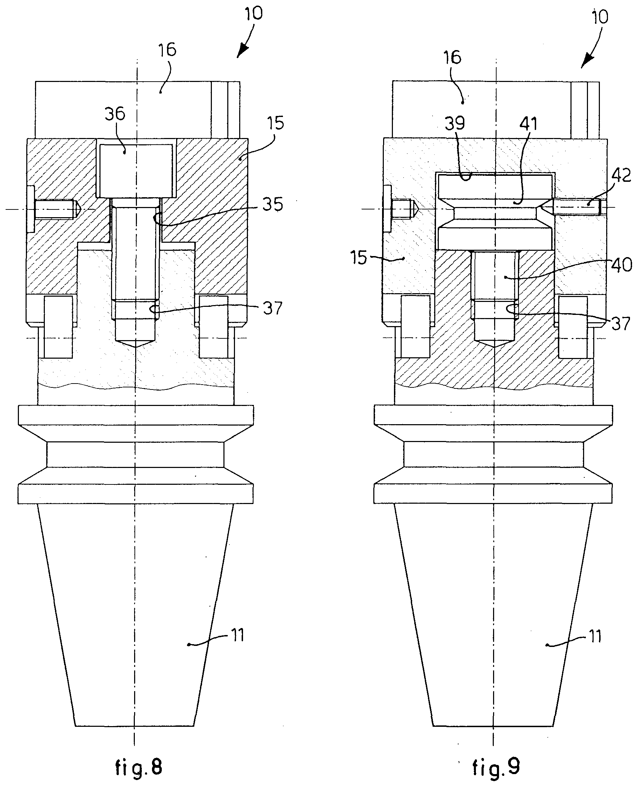

The supporting body 15 has a substantially cylindrical shape, and is able to be attached directly and coaxially to the mandrel 11. Some types of attachment of the supporting body 15 to the mandrel 11 will be explained in detail hereafter with reference to figs. 8 and 9.

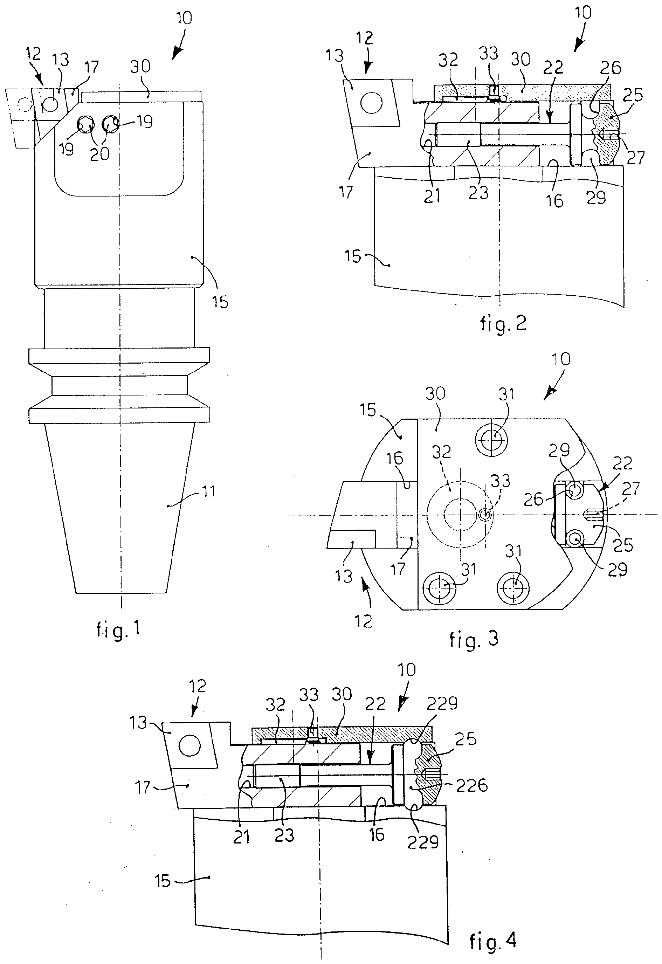

With particular reference to figs. 1, 2 and 3, a first form of embodiment is shown, in which the tool-holder head 10 provides that only one cartridge 17 is associated with the supporting body 15.

In this case, the supporting body 15 comprises a single sliding seating 16 made on an upper surface thereof.

The sliding seating 16 is made transversely through and open upward, so as to house the cartridge 17 slidingly inside it and allow the latter to move in a substantially radial direction with respect to the axis of rotation of the mandrel 11.

In particular, the sliding seating 16 has a width substantially equivalent to the width of the cartridge 17, so as to guide the radial sliding thereof and guarantee the linear movement thereof, with respect to a horizontal plane. The sliding seating 16 has a slightly greater depth than the height of the cartridge 17.

The supporting body 15 also comprises two threaded through holes 19, made facing on one side toward the outside of the supporting body 15, and on the other side toward the inside of the sliding seating 16. Inside the two threaded holes 19 respective clamping screws 20 or grub screws are screwed, able to be tightened against a flank of the cartridge 17 so as to clamp the latter with respect to the sliding seating 16.

The cartridge 17 is substantially oblong in shape and, on one side, supports the cutter plate 13 of the tool 12 whereas, on the other side, it comprises a threaded hole 21, in this case blind.

The tool-holder head 10 also comprises an adjustment screw 22, disposed inside the sliding seating 16 and able to actuate the radial movement of the cartridge 17.

In particular, the adjustment screw 22 comprises a threaded portion 23 substantially mating with the threaded hole 21 and able to be screwed into the latter, and a head portion 25.

In this case, the head portion 25 is provided with an annular constraint seating 26 and an axial incision 27, to house a common screwing tool, not shown, in this case a Philips screwdriver ®.

The annular seating 26 is able to cooperate through same-shape coupling with two relative constraining pins 29 attached inside the sliding seating 16.

The reciprocal shaping of the annular seating 26 and the constraint pins 29 is such as to allow the free rotation of the adjustment screw 22 inside the sliding seating 16 and, at the same time, to prevent the adjustment screw 22 from making any axial movement inside the sliding seating 16.

In this way, the rotation in one direction or the other of the adjustment screw 22, due to the effect of the threaded coupling of the threaded portion 23 and the threaded hole 21, causes a movement of the cartridge 17 toward the outside or toward the inside with respect to the supporting body 15.

According to the variant shown in fig. 4, the head portion 25 is provided with an annular constraint rib 226 able to cooperate due to same-shape coupling with relative constraint seatings 229 made inside the sliding seating 16 and also on a cover 30 of the tool-holder head 10.

In this variant solution too, the reciprocal shaping of the annular rib 226 and the constraint seatings 229 is such as to allow the free rotation of the adjustment screw 22 inside the sliding seating 16 and, at the same time, to prevent the adjustment screw 22 from making any axial movement inside the sliding seating 16. The tool-holder head 10 also comprises a cover 30 attached by means of clamping screws 31 to the upper surface of the supporting body 15, so as to close the sliding seating 16 at the top.

The cover 30 supports on its lower surface a cupped spring 32, positioned so as to be facing toward the sliding seating 16, in the assembled condition of the cover 30.

In this case the cupped spring 32 is constrained to the cover 30 by means of a screw 33. According to a variant, not shown, the cupped spring 32 and the cover 30 are constrained due to same-shape coupling with a relative positioning seating made on the lower surface of the cover 30.

The cupped spring 32 thrusts against the cartridge 17, keeping it under pressure in contact with the bottom of the sliding seating 16.

In this way, the linear movement with respect to a vertical plane is guaranteed, stabilizing any possible jolts due to the movement actuated by the threaded coupling of the threaded portion 23 of the adjustment screw 22 and the threaded hole 21.

The solution according to the present invention thus allows an analogical movement of the cartridge 17, controlled and extremely precise, with respect to the supporting body 15, thus allowing to adjust the cutting diameter 12, substantially for any value and/or tolerance.

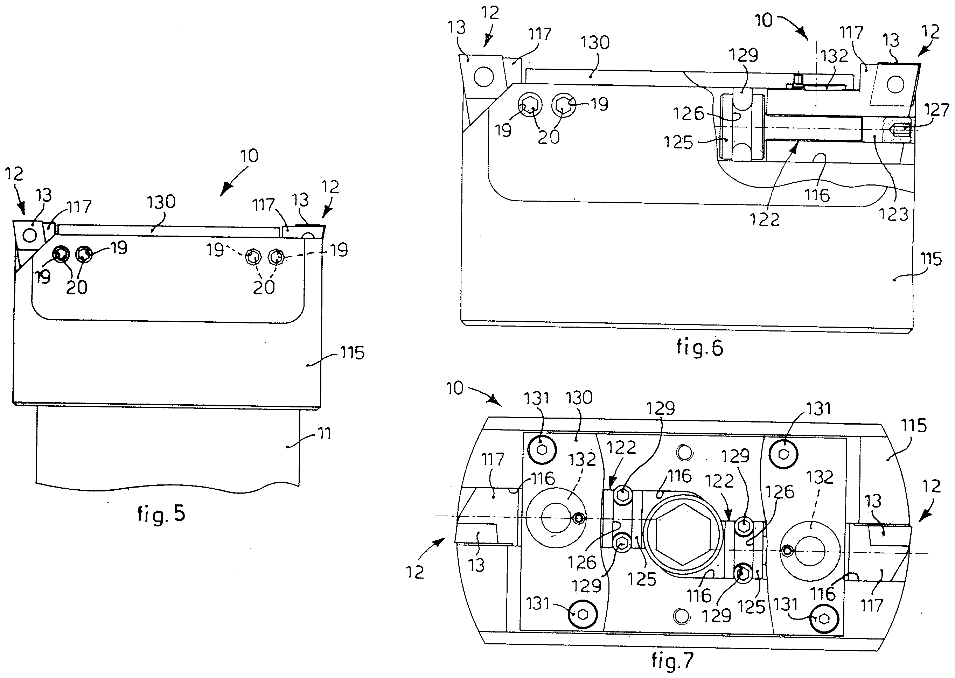

With particular reference to figs. 5, 6 and 7, a second form of embodiment is shown, in which the tool-holder head 10 provides that two opposite cartridges 117 are associated with the supporting body 115.

In this case, the supporting body 115 comprises two sliding seatings 116 made substantially parallel to each other and offset with respect to the same radial axis.

Each sliding seating 116 is made open toward a relative side of the supporting body 115 and upward, so as to house slidingly inside it the relative cartridge 117 and to allow the latter to make a movement in a substantially radial direction with respect to the axis of rotation of the mandrel 11.

In this embodiment too, each sliding seating 116 has a width substantially equivalent to the width of the relative cartridge 117, and has a depth slightly greater than the height of the relative cartridge 117.

For every sliding seating 116, the supporting body 115 also comprises relative threaded through holes 19 with respective clamping screws 20 or grub screws.

Each cartridge 117 supports the relative cutter plate 13, and comprises a threaded hole 121, in this case through.

The tool-holder head 10 in this case comprises two adjustment screws 122, disposed inside the relative sliding seating 116 in order to actuate the radial movement of the relative cartridge 117.

In this case, the adjustment screw 122 comprises a threaded portion 123 screwed into the threaded hole 121, and a head portion 125, for anchoring to the relative sliding seating 116.

In this case, the threaded portion 123 is provided with the axial incision 127, to house the screwing tool.

The annular seating 126 is made on the head portion 125 and is able to cooperate due to same-shape coupling with two relative constraint pins 129 attached inside the relative sliding seating 116.

As in the previous embodiment, the reciprocal shaping of the annular seating 126 and the constraint pins 129 is such as to allow the free rotation of the adjustment screw 122 inside the sliding seating 116 and, at the same time, to prevent the adjustment screw 122 from making any axial movement inside the sliding seating 116.

The variant solution shown in fig. 4 is equally applicable for the head portions 125 of the embodiment shown in figs. 5, 6 and 7.

In this case too, the tool-holder head 10 comprises the cover 130 attached by means of clamping screws 131 to the upper surface of the supporting body 115, so as to close the sliding seatings 116 at the top.

The cover 130 supports on its lower surface two cupped springs 132, each positioned toward the relative sliding seating 116. In this embodiment too, each cupped spring 132 thrusts against the relative cartridge 117, to keep it under pressure in contact with the bottom of the relative sliding seating 116, during its movement.

With reference to fig. 8, a first form of embodiment is shown of an attachment member to attach the supporting body 15 concentrically to the mandrel 11. Here and hereafter it is understood that what we have described for the supporting body 15 is equally valid for the supporting body 115.

In this case, the supporting body 15 comprises a through seating 35 to house an attachment screw 36.

The through seating 35 is made on the bottom of the sliding seating 16, in a position such that it can be positioned substantially coaxial with the axis of rotation of the mandrel 11, keeping the mass of the supporting body 15 balanced during the rotation of the tool 12.

The attachment screw 36 is screwed onto a corresponding threaded hole 37 made on the mandrel 11 in a position substantially coaxial with its axis of rotation.

This solution is simple and economical, and ensures an excellent hold of the attachment made.

As shown in fig. 9, the attachment member provides that on the supporting body 15 a blind seating 39 is made, open toward the mandrel 11.

The attachment member in fig. 9 provides a threaded pin 40, having an annular groove 41. The threaded pin 40 is able to be disposed partly in the blind seating 39 of the supporting body 15 and partly screwed into the threaded hole 37 of the mandrel 11.

In this solution, an anchoring screw 42 is also provided, screwed through and transverse on the supporting body 15 and able to cooperate with the annular groove 41 of the threaded pin 40, so as to constrain the latter to the supporting body 15 and consequently the supporting body 15 to the mandrel 11.

This second solution allows to selectively assemble and dis-assemble the tool-holder head 10 to/from the mandrel 11 without affecting the cartridge or cartridges 17 or 117.

It is clear however that modifications and/or additions of parts or steps may be made to the tool-holder head 10 and the relative adjustment method as described heretofore, without departing from the scope of the present invention as defined by the claims.

It is also clear that, although the present invention has been described with reference to specific examples, a person of skill in the art shall certainly be able to achieve many other equivalent forms of tool-holder head of the adjustable type and relative adjustment method, having the characteristics as set forth in the claims and hence all coming within the protection defined thereby.

## Claims

1. Adjustable tool-holder head comprising a supporting body (15, 115) able to be attached to a mandrel (11) of a machine tool and comprising at least a sliding seating (16, 116) in which at least a mobile element (17, 117) is slidingly positioned, on said at least a mobile element (17, 117) a cutter (13) of said tool (12) is attached and mounted sliding in a radial direction with respect to said supporting body (15, 115), in order to adjust the cutting diameter of said tool (12), and at least an adjustment mechanism mounted on said supporting body (15, 115) and able to move said mobile element (17, 117) with respect to said supporting body (15, 115), wherein said adjustment mechanism comprises at least a screw element (22, 122) rotatable around its own axis of rotation, mounted on said supporting body (15, 115) in a constrained manner with respect to said axis of rotation, and rotatable to continuously move radially said mobile element (17, 117) with respect to said supporting body (15, 115) between a maximum limit and a minimum limit, **characterized in that** the screw element (22, 122) comprises a head portion (25, 125) provided with anti-axial movement means (26, 126, 226) coupled to relative constraint means (29, 129, 229) provided inside the relative sliding seating (16, 116), so as to constrain said screw element (22, 122) axially in the relative sliding seating (16, 116), wherein said anti-axial movement means (26, 126, 226) and said constraint means (29, 129, 229) are reciprocally configured with the same shape to allow a free rotation of the screw element (22, 122) inside the sliding seating (16, 116) and, at the same time, to prevent the screw element (22, 122) from making any axial movement inside the sliding seating (16, 116) and wherein the adjustment mechanism also comprises elastic means (32, 132) thrusting against the upper part of the mobile element (17, 117), keeping it under pressure in contact with the bottom of the sliding seating (16, 116) to contrast possible transverse displacements of the mobile element (17, 117).

2. Tool-holder head as in claim 1, **characterized in that** said anti-axial movement means comprise an annular seating (26, 126) made on the head portion (25, 125) of the screw element (22, 122) and able to cooperate with constraint pins (29, 129) provided in the sliding seating (16).

3. Tool-holder head as in claim 1, **characterized in that** said anti-axial movement means comprise an annular constraint rib (226) made on the head portion (25, 125) of the screw element (22, 122) and able to cooperate with a relative constraint seating (229) made inside the sliding seating (16).

4. Tool-holder head as in claim 1, **characterized in that** it comprises a cover (30, 130) attached by means of clamping screws (31, 131) to the upper surface of the supporting body (15, 115), so as to close the sliding seating (16, 116) at the top, the cover (30, 130) supporting on its lower surface said elastic means (32, 132) so that said elastic means (32, 132) is facing toward the sliding seating (16, 116), in the assembled condition of the cover (30, 130).

5. Tool-holder head as in claim 4, **characterized in that** said elastic means (32, 132) is constrained to the cover (30, 130) by a screw (33) or by same-shape coupling with a relative positioning seating made on the lower surface of the cover (30, 130).

6. Tool-holder head as in any claims hereinbefore, **characterized in that** said elastic means (32, 132) comprises at least one cupped spring.

7. Tool-holder head as in claim 1, **characterized in that** the sliding seating (16, 116) comprises two lateral guide walls distanced from each other by a value coordinated with the width of the relative mobile element (17, 117).

8. Tool-holder head as in claim 1, **characterized in that** it comprises a sliding seating (16) made radially through and open upward on the supporting body (15), in order to house a relative mobile element (17) slidingly inside it.

9. Tool-holder head as in claim 1, **characterized in that** it comprises two sliding seatings (116) made on the supporting body (115), offset to each other with respect to the same radial axis, in order to house the relative mobile elements (117) slidingly inside them.

10. Tool-holder head as in any claim hereinbefore, **characterized in that** it comprises clamping means (20) mounted on the supporting body (15, 115) and able to act selectively against the relative mobile element (17, 117) in order to prevent the radial movement thereof with respect to the supporting body (15, 115).

11. Tool-holder head as in any claim hereinbefore, **characterized in that** the screw element (22, 122) comprises at least a threaded portion (23, 123) able to be screwed into a mating threaded hole (21) made in the relative mobile element (17, 117).

12. Tool-holder head as in any claim hereinbefore, **characterized in that** the screw element (22, 122) comprises an axial incision (27, 127) facing toward the outside of the supporting body (15, 115) and able to allow the selective rotation of the screw element (22, 122) by means of a common screwing tool.

13. Tool-holder head as in any claim hereinbefore, **characterized in that** it comprises at least an attachment member able to attach the supporting body (15. 115) concentrically to the mandrel (11).

14. Tool-holder head as in claim 13, wherein the mandrel (11) comprises a threaded axial hole (37), **characterized in that** the attachment member comprises at least a through seating (35) made axially on the supporting body (15, 115) and an attachment screw (36) able to be housed in said through seating (35) and to be screwed into said axial hole (37).

15. Tool-holder head as in claim 13, wherein the mandrel (11) comprises a threaded axial hole (37), **characterized in that** the attachment member comprises at least a blind seating (39) open toward the mandrel (11) and a threaded pin (40) having an annular groove (41) and able to be disposed partly in said blind seating (39) and partly screwed into said axial hole (37), anchoring means (42) being provided transversely through on the supporting body (15, 115) in order to cooperate with said annular groove (41) and to constrain said threaded pin (40).

16. Method to adjust the cutting diameter of a tool, by means of a tool-holder head comprising a supporting body (15, 115) able to be attached to a mandrel (11) of a machine tool and comprising at least a sliding seating (16, 116) in which at least a mobile element (17, 117) is slidingly positioned, on said at least a mobile element (17, 117) a cutter (13) of said tool (12) is attached and mounted sliding in a radial direction with respect to said supporting body (15, 115), in order to adjust the cutting diameter of said tool (12), and at least an adjustment mechanism mounted on said supporting body (15, 115) and able to move said mobile element (17, 117) with respect to said supporting body (15, 115), **characterized in that** it provides at least an adjustment step in which at least a screw element (22, 122), constrained axially but not rotationally to said supporting body (15, 115), is screwed onto said mobile element (17, 117) in order to determine the controlled continuous movement of said mobile element (17, 117) with respect to said supporting body (15, 115) between a maximum limit and a minimum limit, wherein in said adjustment step the screw element (22, 122) is constrained axially in the relative sliding seating (16, 116) by anti-axial movement means (26, 126, 226) provided in its head portion (25, 125) and coupled to relative constraining means (29, 129, 229) provided inside the relative sliding seating (16, 116), wherein said anti-axial movement means (26, 126, 226) and said constraint means (29, 129, 229) are reciprocally configured with the same shape to allow a free rotation of the screw element (22, 122) inside the sliding seating (16, 116) and, at the same time, to prevent the screw element (22, 122) from making any axial movement inside the sliding seating (16, 116) and wherein the adjustment mechanism also comprises elastic means (32, 132) thrusting against the mobile element (17, 117), keeping it under pressure in contact with the bottom of the sliding seating (16, 116) to contrast possible transverse displacements of the mobile element (17, 117).

## Patentansprüche

1. Justierbarer Werkzeughalterkopf, der einen Stützkörper (15, 115) umfasst, der an einem Dorn (11) einer Werkzeugmaschine angebracht werden kann und mindestens einen Gleitsitz (16, 116) umfasst, in dem mindestens ein bewegliches Element (17, 117) gleitend positioniert ist, wobei auf dem mindestens einen beweglichen Element (17, 117) eine Schneidvorrichtung (13) des Werkzeugs (12) angebracht und so montiert ist, dass sie in einer radialen Richtung mit Bezug auf den Stützkörper (15, 115) gleiten kann, um den Schneiddurchmesser des Werkzeugs (12) zu justieren, und wobei mindestens ein Justiermechanismus auf dem Stützkörper (15, 115) montiert und in der Lage ist, das bewegliche Element (17, 117) mit Bezug auf den Stützkörper (15, 115) zu bewegen, wobei der Justiermechanismus mindestens ein Schraubelement (22, 122) umfasst, das um seine eigene Rotationsachse herum gedreht werden kann, auf dem Stützkörper (15, 115) in einer arretierten Weise mit Bezug auf die Rotationsachse montiert ist, und drehbar ist, um das bewegliche Element (17, 117) kontinuierlich radial mit Bezug auf den Stützkörper (15, 115) zwischen einem Maximallimit und einem Minimallimit zu bewegen, **dadurch gekennzeichnet, dass** das Schraubelement (22, 122) einen Kopfabschnitt (25, 125) umfasst, der mit einem Axialbewegungsverhinderungsmittel (26, 126, 226) versehen ist, das mit einem Relativarretiermittel (29, 129, 229) gekoppelt ist, das im Inneren des Relativgleitsitzes (16, 116) angeordnet ist, um das Schraubelement (22, 122) axial in dem Relativgleitsitz (16, 116) zu arretieren, wobei das Axialbewegungsverhinderungsmittel (26, 126, 226) und das Arretiermittel (29, 129, 229) komplementär mit der gleichen Form konfiguriert sind, um ein freies Drehen des Schraubelements (22, 122) im Inneren des Gleitsitzes (16, 116) zu erlauben und gleichzeitig zu verhindern, dass das Schraubelement (22, 122) eine axiale Bewegung im Inneren des Gleitsitzes (16, 116) vollführt, und wobei der Justiermechanismus außerdem ein elastisches Mittel (32, 132) umfasst, das gegen den oberen Teil des beweglichen Elements (17, 117) drückt und dadurch unter Druck in Kontakt mit dem Boden des Gleitsitzes (16, 116) hält, um möglichen Querverschiebungen des beweglichen Elements (17, 117) entgegenzuwirken.

2. Werkzeughalterkopf nach Anspruch 1, **dadurch gekennzeichnet, dass** das Axialbewegungsverhinderungsmittel einen ringförmigen Sitz (26, 126) umfasst, der auf dem Kopfabschnitt (25, 125) des Schraubelements (22, 122) ausgebildet ist und mit Arretierstiften (29, 129), die in dem Gleitsitz (16) angeordnet sind, zusammenwirken kann.

3. Werkzeughalterkopf nach Anspruch 1, **dadurch gekennzeichnet, dass** das Axialbewegungsverhinderungsmittel eine ringförmige Arretierrippe (226) umfasst, die auf dem Kopfabschnitt (25, 125) des Schraubelements (22, 122) ausgebildet ist und mit einem Relativarretiersitz (229), der im Inneren des Gleitsitzes (16) ausgebildet ist, zusammenwirken kann.

4. Werkzeughalterkopf nach Anspruch 1, **dadurch gekennzeichnet, dass** er eine Abdeckung (30, 130) umfasst, die mittels Klemmschrauben (31, 131) an der Oberseite des Stützkörpers (15, 115) so angebracht ist, dass der Gleitsitz (16, 116) oben geschlossen wird, wobei die Abdeckung (30, 130) an ihrer Unterseite das elastische Mittel (32, 132) so stützt, dass das elastische Mittel (32, 132) im montierten Zustand der Abdeckung (30, 130) in Richtung des Gleitsitzes (16, 116) weist.

5. Werkzeughalterkopf nach Anspruch 4, **dadurch gekennzeichnet, dass** das elastische Mittel (32, 132) an der Abdeckung (30, 130) durch eine Schraube (33) oder durch eine formgleiche Kupplung gehalten wird, wobei ein Relativpositionierungssitz an der Unterseite der Abdeckung (30, 130) ausgebildet ist.

6. Werkzeughalterkopf nach einem der vorangehenden Ansprüche, **dadurch gekennzeichnet, dass** das elastische Mittel (32, 132) mindestens eine Tellerfeder umfasst.

7. Werkzeughalterkopf nach Anspruch 1, **dadurch gekennzeichnet, dass** der Gleitsitz (16, 116) zwei seitliche Führungswände umfasst, die voneinander um einen Wert beabstandet sind, der mit der Breite des relativen beweglichen Elements (17, 117) koordiniert wird.

8. Werkzeughalterkopf nach Anspruch 1, **dadurch gekennzeichnet, dass** er einen Gleitsitz (16) umfasst, der radial durch den Stützkörper (15) hindurch ausgebildet ist und auf dem Stützkörper (15) nach oben offen ist, um ein relatives bewegliches Element (17) gleitend darin aufzunehmen.

9. Werkzeughalterkopf nach Anspruch 1, **dadurch gekennzeichnet, dass** er zwei Gleitsitze (116) umfasst, die auf dem Stützkörper (115), mit Bezug auf dieselbe radiale Achse versetzt zueinander, ausgebildet sind, um das relative bewegliche Elemente (117) gleitend in ihrem Inneren aufzunehmen.

10. Werkzeughalterkopf nach einem der vorangehenden Ansprüche, **dadurch gekennzeichnet, dass** er ein Klemmmittel (20) umfasst, das auf dem Stützkörper (15, 115) montiert und in der Lage ist, selektiv gegen das relative bewegliche Element (17, 117) zu wirken, um seine radiale Bewegung mit Bezug auf den Stützkörper (15, 115) zu verhindern.

11. Werkzeughalterkopf nach einem der vorangehenden Ansprüche, **dadurch gekennzeichnet, dass** das Schraubelement (22, 122) mindestens einen Gewindeabschnitt (23, 123) umfasst, der in ein passendes Gewindeloch (21) geschraubt werden kann, das in dem relativen beweglichen Element (17, 117) ausgebildet ist.

12. Werkzeughalterkopf nach einem der vorangehenden Ansprüche, **dadurch gekennzeichnet, dass** das Schraubelement (22, 122) einen axialen Einschnitt (27, 127) umfasst, der in Richtung der Außenseite des Stützkörpers (15, 115) weist und die selektive Rotation des Schraubelements (22, 122) mittels eines üblichen Schraubwerkzeugs erlauben kann.

13. Werkzeughalterkopf nach einem der vorangehenden Ansprüche, **dadurch gekennzeichnet, dass** er mindestens ein Befestigungselement umfasst, das in der Lage ist, den Stützkörper (15, 115) konzentrisch an dem Dorn (11) anzubringen.

14. Werkzeughalterkopf nach Anspruch 13, wobei der Dorn (11) ein axiales Gewindeloch (37) umfasst, **dadurch gekennzeichnet, dass** das Befestigungselement mindestens einen Durchgangssitz (35) umfasst, der axial an dem Stützkörper (15, 115) ausgebildet ist, und eine Befestigungsschraube (36) umfasst, die in dem Durchgangssitz (35) untergebracht werden kann und in das axiale Loch (37) geschraubt werden kann.

15. Werkzeughalterkopf nach Anspruch 13, wobei der Dorn (11) ein axiales Gewindeloch (37) umfasst, **dadurch gekennzeichnet, dass** das Befestigungselement mindestens einen Blindsitz (39) umfasst, der in Richtung des Dorns (11) offen ist, und einen Gewindestift (40) umfasst, der ein ringförmige Nut (41) aufweist und der teilweise in dem Blindsitz (39) angeordnet werden kann und teilweise in das axiale Loch (37) geschraubt werden kann, wobei ein Verankerungsmittel (42) quer durch den Stützkörper (15, 115) hindurch angeordnet ist, um mit der ringförmigen Nut (41) zusammenzuwirken und den Gewindestift (40) zu arretieren.

16. Verfahren zum Justieren des Schneiddurchmessers eines Werkzeugs mittels eines Werkzeughalterkopfes, der einen Stützkörper (15, 115) umfasst, der an einem Dorn (11) einer Werkzeugmaschine angebracht werden kann und mindestens einen Gleitsitz (16, 116) umfasst, in dem mindestens ein bewegliches Element (17, 117) gleitend positioniert ist, wobei auf dem mindestens einen beweglichen Element (17, 117) eine Schneidvorrichtung (13) des Werkzeugs (12) angebracht und so montiert ist, dass sie in einer radialen Richtung mit Bezug auf den Stützkörper (15, 115) gleiten kann, um den Schneiddurchmesser des Werkzeugs (12) zu justieren, und wobei mindestens ein Justiermechanismus auf dem Stützkörper (15, 115) montiert und in der Lage ist, das bewegliche Element (17, 117) mit Bezug auf den Stützkörper (15, 115) zu bewegen, **dadurch gekennzeichnet, dass** es mindestens einen Justierschritt bereitstellt, in dem mindestens ein Schraubelement (22, 122), das axial, aber nicht rotational an dem Stützkörper (15, 115) arretiert ist, auf das bewegliche Element (17, 117) geschraubt ist, um die kontrollierte kontinuierliche Bewegung des beweglichen Elements (17, 117) mit Bezug auf den Stützkörper (15, 115) zwischen einem Maximallimit und einem Minimallimit zu bestimmen, wobei in dem Justierschritt das Schraubelement (22, 122) axial in dem Relativgleitsitz (16, 116) durch ein Axialbewegungsverhinderungsmittel (26, 126, 226) arretiert wird, das in seinem Kopfabschnitt (25, 125) ausgebildet ist und mit einem Relativarretiermittel (29, 129, 229) gekoppelt ist, das im Inneren des Relativgleitsitzes (16, 116) angeordnet ist, wobei das Axialbewegungsverhinderungsmittel (26, 126, 226) und das Arretiermittel (29, 129, 229) komplementär mit der gleichen Form konfiguriert sind, um ein freies Drehen des Schraubelements (22, 122) im Inneren des Gleitsitzes (16, 116) zu erlauben und gleichzeitig zu verhindern, dass das Schraubelement (22, 122) eine axiale Bewegung im Inneren des Gleitsitzes (16, 116) vollführt, und wobei der Justiermechanismus außerdem ein elastisches Mittel (32, 132) umfasst, das gegen das bewegliche Element (17, 117) drückt und dadurch unter Druck in Kontakt mit dem Boden des Gleitsitzes (16, 116) hält, um möglichen Querverschiebungen des beweglichen Elements (17, 117) entgegenzuwirken.

## Revendications

1. Tête porte-outil réglable comprenant un corps de support (15, 115) pouvant être fixé à un mandrin (11) d'une machine-outil et comprenant au moins un logement de glissement (16, 116) dans lequel au moins un élément mobile (17, 117) est positionné de façon coulissante, une arête (13) dudit outil (12) étant fixée et montée sur ledit au moins un élément mobile (17, 117), glissant dans une direction radiale par rapport audit corps de support (15, 115), afin de régler le diamètre de coupe dudit outil (12), et au moins un mécanisme de réglage monté sur ledit corps de support (15, 115) et capable de déplacer ledit élément mobile (17, 117) par rapport audit corps de support (15, 115), dans lequel ledit corps de support comprend au moins un élément à vis (22, 122) tournant autour de son axe de rotation, monté sur ledit corps de support (15, 115) de manière à être lié par rapport audit axe de rotation, et tournant pour déplacer en continu dans une direction radiale ledit élément mobile (17, 117) par rapport audit corps de support (15, 115) entre une limite maximale et une limite minimale, **caractérisée en ce que** l'élément à vis (22, 122) comprend une partie de tête (25, 125) munie de moyens de déplacement anti-axial (26, 126, 226) couplés à des moyens de liaison associés (29, 129, 229) situés à l'intérieur du logement de glissement associé (16, 116), pour lier ledit élément à vis (22, 122) dans une direction axiale dans le logement de glissement associé (16, 116), dans laquelle lesdits moyens de déplacement anti-axial (26, 126, 226) et lesdits moyens de liaison (29, 129, 229) sont conformés de façon réciproque avec la même forme pour permettre une rotation libre de l'élément à vis (22, 122) à l'intérieur du logement de glissement (16, 116) et, en même temps, pour empêcher que l'élément à vis (22, 122) puisse effectuer tout mouvement axial à l'intérieur du logement de glissement (16, 116), et dans laquelle le mécanisme de réglage comprend également des moyens élastiques (32, 132) exerçant une poussée sur la partie supérieure de l'élément mobile (17, 117), et le maintenant ainsi sous pression en contact avec le fond du logement de glissement (16, 116) pour contraster tout éventuel déplacement transversal de l'élément mobile (17, 117).

2. Tête porte-outil selon la revendication 1, **caractérisée en ce que** lesdits moyens de déplacement anti-axial comprennent un siège annulaire (26, 126) formé sur la partie de tête (25, 125) de l'élément à vis (22, 122) est capable de coopérer avec des broches de liaison (29, 129) situées dans le logement de glissement (16) .

3. Tête porte-outil selon la revendication 1, **caractérisée en ce que** lesdits moyens de déplacement anti-axial comprennent une nervure annulaire de liaison (226) formée sur la partie de tête (25, 125) de l'élément à vis (22, 122) et capable de coopérer avec un logement de liaison associé (229) formé à l'intérieur du logement de glissement (16).

4. Tête porte-outil selon la revendication 1, **caractérisée en ce qu'**elle comprend un couvercle (30, 130) fixé au moyen de vis de serrage (31, 131) à la surface supérieure du corps de support (15, 115), de façon à fermer le logement de glissement (16, 116) à son sommet, le couvercle (30, 130) supportant lesdits moyens élastiques (32, 132) sur sa surface inférieure de manière que lesdits moyens élastiques (32, 132) fassent face au logement de glissement (16, 116), lorsque le couvercle (30, 130) est monté.

5. Tête porte-outil selon la revendication 4, **caractérisée en ce que** lesdits moyens élastiques (32, 132) sont liés au couvercle (30, 130) par une vis (33) ou par verrouillage de formes avec un logement de positionnement associé formé sur la surface inférieure du couvercle (30, 130) .

6. Tête porte-outil selon n'importe laquelle des revendications précédentes, **caractérisée en ce que** lesdits moyens élastiques (32, 132) comprennent au moins une rondelle ressort.

7. Tête porte-outil selon la revendication 1, **caractérisée en ce que** le logement de glissement (16, 116) comprend deux parois de guidage latéral éloignés les unes des autres à une distance coordonnée avec la largeur de l'élément mobile associé (17, 117).

8. Tête porte-outil selon la revendication 1, **caractérisée en ce qu'**elle comprend un logement de glissement (16) formé dans une direction radiale à travers le corps de support (15) et ouvert vers le haut sur celui-ci, afin de loger de façon coulissante un élément mobile associé (17).

9. Tête porte-outil selon la revendication 1, **caractérisée en ce qu'**elle comprend deux logements coulissants (116) formés sur le corps de support (115), décalés l'un par rapport à l'autre par rapport au même axe radial, afin de loger les éléments mobiles associés (117) glissant à l'intérieur de ceux-ci.

10. Tête porte-outil selon n'importe laquelle des revendications précédentes, **caractérisée en ce qu'**elle comprend des moyens de serrage (20) montés sur le corps de support (15, 115) et capables d'agir sélectivement contre l'élément mobile associé (17, 117) afin d'empêcher le mouvement radial de celui-ci par rapport au corps de support (15, 115).

11. Tête porte-outil selon n'importe laquelle des revendications précédentes, **caractérisée en ce que** l'élément à vis (22, 122) comprend au moins une partie filetée (23, 123) pouvant être vissée dans un trou fileté complémentaire (21) formé dans l'élément mobile associé (17, 117).

12. Tête porte-outil selon n'importe laquelle des revendications précédentes, **caractérisée en ce que** l'élément à vis (22, 122) comprend une entaille axiale (27, 127) orientée vers l'extérieur du corps de support (15, 115) et capable de permettre la rotation sélective de l'élément à vis (22, 122) au moyen d'un simple outil de vissage.

13. Tête porte-outil selon n'importe laquelle des revendications précédentes, **caractérisée en ce qu'**elle comprend au moins un élément de fixation pouvant fixer le corps de support (15, 115) en position concentrique au mandrin (11).

14. Tête porte-outil selon la revendication 13, dans lequel le mandrin (11) comprend un trou axial fileté (37), **caractérisé en ce que** l'élément de fixation comprend au moins un logement débouchant (35) formé axialement sur le corps de support (15, 115) et une vis de fixation (36) pouvant être logée dans ledit logement débouchant (35) et d'être vissée dans ledit trou axial (37).

15. Tête porte-outil selon la revendication 13, dans lequel le mandrin (11) comprend un trou axial filetée (37), **caractérisé en ce que** l'élément de fixation comprend un logement borgne (39) ouvert vers le mandrin (11) et une broche filetée (40) comportant une rainure annulaire (41) et pouvant être en partie placée dans ledit logement borgne (39) et en partie vissé dans ledit trou axial (37), des moyens d'ancrage (42) étant placés transversalement dans le corps de support (15, 115) afin de coopérer avec ladite rainure annulaire (41) et de lier ladite broche filetée (40).

16. Procédé de réglage du diamètre de coupe d'un outil au moyen d'une tête porte-outil réglable comprenant un corps de support (15, 115) pouvant être fixé à un mandrin (11) d'une machine-outil et comprenant au moins un logement de glissement (16, 116) dans lequel au moins un élément mobile (17, 117) est positionné de façon coulissante, une arête (13) dudit outil (12) étant fixée et montée sur ledit au moins un élément mobile (17, 117), glissant dans une direction radiale par rapport audit corps de support (15, 115), afin de régler le diamètre de coupe dudit outil (12), et au moins un mécanisme de réglage monté sur ledit corps de support (15, 115) et capable de déplacer ledit élément mobile (17, 117) par rapport audit corps de support (15, 115), **caractérisé en ce qu'**il comporte au moins une étape de réglage dans laquelle au moins un élément à vis (22, 122) lié en direction axiale et non en direction de rotation audit corps de support (15, 115), est vissé sur ledit élément mobile (17, 117) afin de déterminer le mouvement continu contrôlé dudit élément mobile (17, 117) par rapport audit corps de support (15, 115) entre une limite maximale et une limite minimale, dans lequel, dans ladite étape de réglage, l'élément à vis (22, 122) est lié en direction axiale dans le logement de glissement associé (16, 116) par des moyens de déplacement anti-axial (26, 126, 226) situés dans sa partie de tête (25, 125) et accouplés à des moyens de liaison associés (29, 129, 229) situés à l'intérieur du logement de glissement associé (16, 116), dans lequel lesdits moyens de déplacement anti-axial (26, 126, 226) et lesdits moyens de liaison (29, 129, 229) sont conformés de façon réciproque avec la même forme pour permettre une rotation libre de l'élément à vis (22, 122) à l'intérieur du logement de glissement (16, 116) et, en même temps, pour empêcher que l'élément à vis (22, 122) puisse effectuer tout mouvement axial à l'intérieur du logement de glissement (16, 116), et dans lequel le mécanisme de réglage comprend également des moyens élastiques (32, 132) exerçant une poussée sur la partie supérieure de l'élément mobile (17, 117), et le maintenant ainsi sous pression en contact avec le fond du logement de glissement (16, 116) pour contraster tout éventuel déplacement transversal de l'élément mobile (17, 117) .
